# EUROPÄISCHE PATENTANMELDUNG

(11) **EP 4 252 885 A1**
(43) Veröffentlichungstag der Anmeldung: **04.10.2023**
(21) Anmeldenummer: 23159895.4
(22) Anmeldetag: 03.03.2023
(51) Int. Cl.: B01D 35/02, F25D 23/12

(54) **KÜHL- UND/ODER GEFRIERGERÄT**

(30) Priorität: 31.03.2022 DE 102022107744; 06.05.2022 DE 102022111293
(71) Anmelder: Liebherr-Hausgeräte Lienz GmbH, 9900 Lienz (AT)
(72) Erfinder: ZOIER, Hans, 9907 Tristach (AT); MUIGG, Lukas, 9990 Nussdorf Debant (AT)
(74) Vertreter: Herrmann, Uwe

(57) **Zusammenfassung**

Die vorliegende Erfindung betrifft ein Kühl- und/oder Gefriergerät mit einer Filtereinheit zur Filtration von Wasser, wobei die Filtereinheit einen Zulauf für zu filtrierendes Wasser, einen Ablauf für filtriertes Wasser und ein zwischen Zu- und Ablauf befindliches Filtermaterial aufweist, wobei die Filtereinheit zwischen Zu- und Ablauf ein Leitmittel aufweist, die ausgebildet sind, das Wasser in eine Rotationsbewegung zu versetzen.

## Beschreibung

Die vorliegende Erfindung betrifft ein Kühl- und/oder Gefriergerät, mit einer Filtereinheit zur Filtration von Wasser, wobei die Filtereinheit einen Zulauf für zu filtrierendes Wasser, einen Ablauf für filtriertes Wasser und ein zwischen Zu- und Ablauf befindliches Filtermaterial aufweist.

Aus dem Stand der Technik sind derartige Geräte bekannt. Die Filtereinheit dient zur Reinigung bzw. Filtration von Wasser, das beispielsweise einem Eisbereiter des Gerätes oder einen Wasserdispenser des Gerätes zugeführt wird.

Aus dem Stand der Technik ist bisher bekannt, dass Filtereinheiten, die beispielsweise schwach saure Kationentauscher als Filtermaterial beinhalten, zwingend in vertikaler Durchströmungsrichtung werden müssen, sodass durch die Erdanziehungskraft sichergestellt wird, dass das Filtermedium im besten Fall als Festbettvariante vorliegt.

Die notwendigerweise vertikale Anordnung der Filtereinheit ist nachteilig, da diese die Flexibilität bei der Anordnung der Filtereinheit einschränkt.

Der vorliegenden Erfindung liegt die Aufgabe zugrunde, ein Kühl- und/oder Gefriergerät der eingangs genannten Art dahingehend weiterzubilden, dass die Filtereinheit im Hinblick auf die Einbaulage eine große Flexibilität erlaubt und unabhängig von der Einbaulage eine gute Durchströmung des Filtermaterials gewährleistet ist.

Vorzugsweise soll durch die Erfindung einerseits die Kontaktzeit zwischen z.B. porösem, nicht verfestigten oder gepressten Filtermedium und dem Wasser, welches den Filter durchströmt, verlängert werden, andererseits soll erfindungsgemäß die Umgehung der Filterschicht durch das Wasser in jeglicher Einbaulage, beispielsweise horizontal oder vertikal, weitestgehend oder vollständig vermieden werden.

Diese Aufgabe wird durch ein Kühl- und/oder Gefriergerät mit den Merkmalen des Anspruchs 1 gelöst.

Danach ist vorgesehen, dass die Filtereinheit zwischen Zu- und Ablauf Leitmittel aufweist, die ausgebildet sind, das Wasser in dem Bereich, in dem sich das Filtermedium befindet, in eine Rotationsbewegung zu versetzen.

Die Leitmittel verleihen dem zu filtrierenden Wasser somit einen Drall. Vorzugsweise durchströmt das Wasser das Filtermedium im Form eines Gleichstromzyklons.

Erfindungsgemäß ist vorgesehen, dass durch die Kombination aus translatorischer und rotatorischer Bewegung des Wassers an der Außenwand des Filtermediums ein erhöhter zurückzulegender Weg, in Relation zu einer reinen translatorischen Bewegung, durch das Filtermedium erreichbar ist. Damit geht eine verbesserte Filtrationsleistung einher.

Vorzugsweise sind die Leitmittel stromaufwärts des Filtermaterials angeordnet.

In einer weiteren Ausgestaltung der Erfindung umfasst der Zulauf ein Zulaufrohr, das teilweise oder vollständig von dem Filtermaterial umgeben ist. Vorzugsweise sind das Zulaufrohr und das Filtermaterial somit konzentrisch angeordnet.

In einer weiteren Ausgestaltung der Erfindung weist der Zulauf einen Auslass auf, wobei Umlenkmittel vorgesehen sind, die ausgebildet ist, das Wasser von dem Auslass zu dem Filtermaterial hin umzulenken. Dies Umlenkmittel können beispielsweise in Form einer Endkappe der Filtereinheit ausgeführt sein.

Denkbar ist es, dass die Umlenkmittel ausgebildet sind, dass Wasser um 180° umzulenken. Es erfährt somit ausgehend von dem Auslass des Zulaufes hin zum Filtermaterial eine Umlenkung um 180°.

In einer weiteren Ausgestaltung der Erfindung sind der Zulauf und der Ablauf so zueinander angeordnet, dass das Wasser im Zu- und Ablauf in entgegengesetzten Richtungen durch die Filtereinheit strömen.

Die Leitmittel können eine oder mehrere Schaufeln oder sonstige Leitelemente aufweisen, die relativ zur Längsachse der Filtereinheit schräg stehen, so dass das Wasser das Filtermaterial nicht nur in axialer Richtung, sondern auch in Form eines Zyklons durchströmt bzw. durch die Leitelemente einen Drall erfährt.

Das Filtermaterial ist vorzugsweise pulverförmig bzw. partikelförmig. Es ist vorzugsweise lose angeordnet, so dass es durch das Wasser aufgewirbelt werden kann.

Weiterhin kann ein Stator vorgesehen sein, der ausgebildet ist, das Filtermaterial mittels des durch diesen strömenden Wassers zu verwirbeln. Vorzugsweise ist somit vorgesehen, dass durch die Schaffung eines Stators, der beispielsweise im Filterkörper bzw. in das Filtermaterial integriert sein kann oder auch diesem vorgeschaltet sein kann, eine Verwirbelung des Filtermaterials entlang der translatorischen Durchströmungsrichtung stattfindet, wodurch eine Erhöhung der Reaktionskinetik, sowie eine Minimierung der Limitierung des Stofftransportes stattfindet.

Die Verwendung von turbulenten Strömungen innerhalb des Filtermaterial hat den weiteren Vorteil, dass eine Agglomeration der Filterpartikel vermieden werden kann, wodurch die spezifische Oberfläche des Filtermaterials zusätzlich erhöht werden kann.

Vorzugsweise steht der Auslass der Filtereinheit mit einem Eisbereiter oder Wasserspender des Gerätes in Fluidverbindung.

Weiterhin ist vorzugsweise vorgesehen, dass der Einlass der Filtereinheit mit einem Festwasseranschluss in Fluidverbindung steht.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Die einzige Figur zeigt eine schematische Schnittansicht durch eine Filtereinheit gemäß der Erfindung.

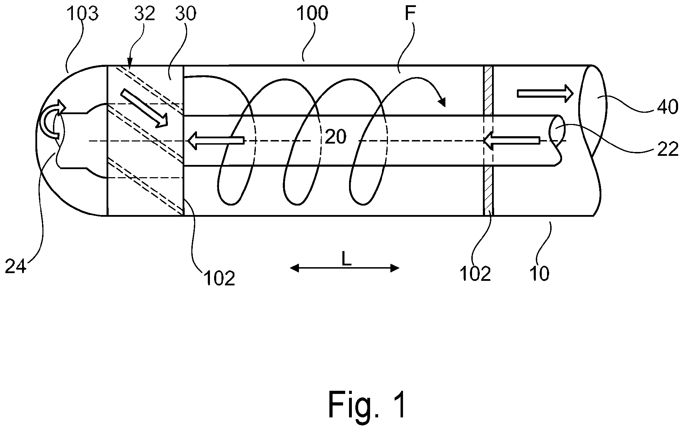

In Figur 1 ist mit dem Bezugszeichen 10 eine Filtereinheit gekennzeichnet.

Diese weist ein Gehäuse 100 und ein darin befindliches Filtermaterial F auf. Das Gehäuse 100 ist im Querschnitt vorzugsweise kreisförmig, d.h. weist insgesamt eine zylindrische Mantelfläche auf.

Mit dem Bezugszeichen 102 sind Filterscheiben gekennzeichnet, die sich voneinander beabstandet über die gesamte Querschnittsfläche des Gehäuses 100 erstrecken und in axialer Richtung des Filtermaterial zwischen sich aufnehmen, d.h. die Scheiben 102 begrenzen zusammen mit dem Gehäuse 100 den Raum, in dem sich das Filtermaterial F befindet.

In dem Filtermaterial F befindet sich ein Zulaufrohr 20, das einen Einlass 22 und einen Auslass 24 aufweist. Dieser kann beispielsweise mit einem Wasserdispenser oder Eisbereiter fluidisch verbunden sein.

In dem Gehäuse 100 befindet sich des Weiteren der Stator 30, der eine Mehrzahl von Leitschaufeln 32 aufweist, die relativ zur Längsachse L der Filtereinheit schräg stehen.

Mit dem Bezugszeichen 40 ist der Ablauf für das filtrierte Wasser aus der Filtereinheit gekennzeichnet.

Die Pfeile markieren die Strömungsrichtung des Wassers.

Das Wasser strömt zunächst z.B. von einem Festwasseranschluss des Gerätes in den Einlass 22 des Zulaufrohrs 20, das sich in axialer Richtung L der Filtereinheit erstreckt.

Aus dem Auslass 24 tritt das Wasser aus und trifft dort auf die Innenseite der innen abgerundeten, teilkugelförmigen Endkappe 103 des Gehäuses 100. Es wird mittels der Endkappe um 180° umgelenkt und gelangt dann in den Leitapparat bzw. in den Stator 30, der relativ zur Längsachse schräg gestellte Leitschaufeln 32 aufweist. Der Stator 30 ist dem Filtermaterial F in Strömungsrichtung vorgeschaltet.

Trifft das Wasser auf diese Leitschaufeln 32, erfährt es einen Drall, so dass die translatorische Bewegung des Wassers durch eine Drehbewegung überlagert wird. Das Wasser bewegt sich somit durch das Filtermaterial F in Form eines Zyklons bzw. Gleichstromzyklons. Durch die wirkende Zentrifugalkraft, sowie aufgrund des Dichteunterschiedes zwischen dem Filtermaterial F und dem durchströmenden Wasser werden die Partikel des Filtermaterials nach außen, auf die Filterwand, d.h. auf die Innenseite des Gehäuses 100 gedrückt und dadurch wird eine Umströmung der Filterschicht vermieden.

So wird die Umgehung der Filterschicht in jeglicher Einbaulage, beispielsweise horizontal oder vertikal, vollständig vermieden.

Durch die Einbringung des Prinzips des Gleichstromzyklons und somit die Anordnung eines Stators 30 vor dem Filterkörper F bzw. vor der Filtereinheit 10 wird dem durchströmenden Wasser ein entsprechender Drall impliziert. Durch die Kombination aus translatorischer und rotatorischer Bewegung des Wassers an der Außenwand des Filterkörpers wird ein erhöhter zurückzulegender Weg, in Relation zu einer reinen translatorischen Bewegung, durch die Filterschicht bzw. das Filtermaterial erreicht.

## Patentansprüche

1. Kühl- und/oder Gefriergerät mit einer Filtereinheit zur Filtration von Wasser, wobei die Filtereinheit einen Zulauf für zu filtrierendes Wasser, einen Ablauf für filtriertes Wasser und ein zwischen Zu- und Ablauf befindliches Filtermaterial aufweist, **dadurch gekennzeichnet, dass** die Filtereinheit zwischen Zu- und Ablauf ein Leitmittel aufweist, die ausgebildet sind, das Wasser in eine Rotationsbewegung zu versetzen.

2. Kühl- und/oder Gefriergerät nach Anspruch 1, **dadurch gekennzeichnet, dass** die Leitmittel stromaufwärts des Filtermaterials angeordnet sind.

3. Kühl- und/oder Gefriergeräte nach Anspruch 1 oder 2, **dadurch gekennzeichnet, dass** der Zulauf ein Zulaufrohr umfasst, das teilweise oder vollständig von dem Filtermaterial umgeben ist.

4. Kühl- und/oder Gefriergerät nach einem der vorhergehenden Ansprüche, **dadurch gekennzeichnet, dass** der Zulauf einen Auslass aufweist und dass Umlenkmittel vorgesehen sind, die ausgebildet ist, das Wasser von dem Auslass zu dem Filtermaterial hin umzulenken.

5. Kühl- und/oder Gefriergerät nach Anspruch 4, **dadurch gekennzeichnet, dass** die Umlenkmittel ausgebildet sind, dass Wasser um 180° umzulenken.

6. Kühl- und/oder Gefriergerät nach einem der vorhergehenden Ansprüche, **dadurch gekennzeichnet, dass** der Zulauf und der Ablauf so zueinander angeordnet sind, dass das Wasser im Zu- und Ablauf in entgegengesetzten Richtungen strömen.

7. Kühl- und/oder Gefriergerät nach einem der vorhergehenden Ansprüche, **dadurch gekennzeichnet, dass** ein Stator vorgesehen ist, der ausgebildet ist, das Filtermaterial mittels des durch dieses strömenden Wassers zu verwirbeln.

8. Kühl- und/oder Gefriergerät nach Anspruch 7, **dadurch gekennzeichnet, dass** der Stator eine oder mehrere Schaufeln oder sonstige Leitmittel aufweist, die relativ zur Längsachse der Filtereinheit schräg stehen, so dass das Wasser das Filtermaterial nicht nur in axialer Richtung, sondern auch in Form eines Zyklons durchströmt.

9. Kühl- und/oder Gefriergerät nach einem der vorhergehenden Ansprüche, **dadurch gekennzeichnet**, der Auslass der Filtereinheit mit einem Eisbereiter oder Wasserspender des Gerätes in Fluidverbindung steht.

10. Kühl- und/oder Gefriergerät nach einem der vorhergehenden Ansprüche, **dadurch gekennzeichnet, dass** der Einlass der Filtereinheit mit einem Festwasseranschluss des Gerätes in Fluidverbindung steht.
